(19) Europäisches Patentamt
European Patent Office
Office européen des brevets

(11) EP 2 610 615 A2

(12) **EUROPEAN PATENT APPLICATION**

(43) Date of publication:
**03.07.2013 Bulletin 2013/27**

(51) Int Cl.:
***G01N 27/447*** (2006.01)

(21) Application number: **12196811.9**

(22) Date of filing: **12.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.12.2011 US 201161569441 P**

(71) Applicant: **Spin Analytical, Inc.**
**Durham, NH 03824-0865 (US)**

(72) Inventors:
• **Austin, J. Brett**
  **South Berwick ME 03908 (US)**
• **Laue, Thomas M.**
  **Lee NH 03861 (US)**

(74) Representative: **Jackson, Nicholas Andrew et al**
**Dummett Copp LLP**
**25 The Square**
**Martlesham Heath**
**Ipswich, Suffolk IP5 3SL (GB)**

(54) **Membrane Confined Electrophoresis**

(57) A membrane confined electrophoresis cuvette assembly is used to measure the effective charge and electrophoretic mobility of macromolecules in solution. The cuvette assembly features a sample including macro-ions or macromolecules of undetermined type and quantity that is held in suspension in a quartz cuvette sealed at either end by membranes. An electrical current is passed through the cuvette which establishes an electric field along the length of the cuvette assembly. The electric field forces charged macroions to move through the cuvette. The cuvette is bathed in collimated UV light while an absorbance profile measures the ion concentration distribution along the cuvette. The membrane confined electrophoresis provides two complimentary modes of sample analysis: steady state electrophoresis and real-time electrophoretic mobility. The cuvette assembly can be used with a software program that features experiment design control, and complete data analysis of the experiment(s).

Fig. 1

EP 2 610 615 A2

**Description**

CROSS-REFERENCE TO RELATED APPLICATIONS

This application claims priority from United States Provisional Patent Application Serial Number 61/569,441 entitled "Membrane Confined Electrophoresis (MCE)", which was filed on December 12, 2011, which is incorporated fully herein by reference.

TECHNICAL FIELD

The present invention relates to techniques for the measurement of the effective charge and electrophoretic mobility of macromolecules in solution and more particularly, relates to the use of membrane confined electrophoresis for protein characterization, comparison of preparations, solvent formulation and drug development, improving solubility and stability and characterization of ion binding.

BACKGROUND INFORMATION

Electrophoresis is a process that separates molecules according to size and electrical charge. The process occurs by applying an electrical current to the molecules while they are in a fluid. Each molecule will travel through the fluid at a different rate, and the rate is dependent on the electrical charge and size (i.e. type) of the molecule. In this manner, the presence (and in some instances the quantity) of a particular molecule, such as a protein in solution, can be determined.

Electrophoresis methods, such as those disclosed in US Patent No. 4,994,161, determine the charge on a molecule by providing two spaces (a first space and a second space), each containing a buffer solution (e.g., water or saltwater), which establishes a volume (cuvette) between the two spaces. The volume contains the molecule(s) in a fluid/solution that includes a buffer solution, which establishes the pH of the solution and that further includes a gelling agent to inhibit convection. The molecule is confined to the cuvette.

An electrical current runs through the volume from the first space to the second space which causes the molecules to move from the first space to the second space through the volume. There is also external flow of buffer between the first space and second space, and this external flow does not have electrical current. A d-c electric field is established across the volume from the first space to the second space, which establishes an electrophoretic force on each molecule. A diffusive force within the volume, which is opposite to the electrophoretic force, counteracts the electrophoretic force. Once equilibrium between the diffusive force and the electrophoretic force has occurred, the concentration distribution of the molecules is determined and the charge on the molecules is determined. Once the concentration distribution of the molecules is determined, however, the charge on the molecules is determined using a comparison to standards or utilizing a secondary parameter determination method.

The present approach features several problems including the fact that it is not real time and requires a need for a secondary parameter determination in order to measure the effective charge and electrophoretic mobility of macromolecules in solution and it is not sensitive enough to detect low concentration of proteins. As such, there is a need to improve upon the prior art to create an electrophoresis method and an apparatus for accomplishing this method, wherein the effective charge and electrophoretic mobility can be measured using a method that is fast, accurate and that enables the effective charge to be measured without comparison of standards and without the need for secondary parameter determination.

SUMMARY

The present invention features an integrated buffer chamber and electrode assembly permitting the higher electric fields necessary for real time electrophoretic mobility measurements, compact high-resolution imaging optics necessary for measuring the boundary motion during electrophoresis, and reflective chromatic aberration free imaging in the far-UV needed for high sensitivity detection of low concentration samples.

In one embodiment of the present invention, a system is provided that measures the effective charge and electrophoretic mobility of macromolecules in a solution. The system comprises a cuvette assembly configured to measure effective charge and electrophoretic mobility of macromolecules in a solution. The cuvette assembly comprises a quartz cuvette encased by a cuvette holder and sealed on an upper side by a first membrane and on a lower side by a second membrane ; a top buffer chamber and a top buffer chamber electrode, which are encased by a top buffer chamber clamp, wherein the top buffer chamber is coupled to the first membrane; a bottom buffer chamber and a bottom buffer chamber electrode, which are encased by a bottom buffer chamber clamp, wherein the bottom buffer chamber is coupled to the second membrane; and an electrical current configured to pass through the quartz cuvette, wherein the electrical current is configured to establish an electric field along a length of the cuvette assembly. The system further comprises a platform, coupled to the cuvette assembly; a top sub assembly coupled to an upper side of the platform, the top sub assembly comprising an optical fiber cartridge, top and bottom pumps, top and bottom drains, drip chambers and first and second buffer inputs; and an optics assembly coupled to a lower side of the platform, wherein the optics assembly is configured to measure boundary motion during electrophoresis.

It is important to note that the present invention is not intended to be limited to a system or method which must satisfy one or more of any stated objects or features of the invention. It is also important to note that the present invention is not limited to the preferred, exemplary, or primary embodiment(s) described herein. Modifications and substitutions by one of ordinary skill in the art are considered to be within the scope of the present invention.

BRIEF DESCRIPTION OF THE DRAWINGS

These and other features and advantages of the present invention will be better understood by reading the following detailed description, taken together with the drawings wherein:

FIG. 1 is a schematic illustrating the basic fluidics and electronic connection of the membrane confined electrophoresis according to one embodiment of the present invention;

FIG. 2 is a an exploded view of the cuvette assembly without the inserted membranes, according to one embodiment of the present invention;

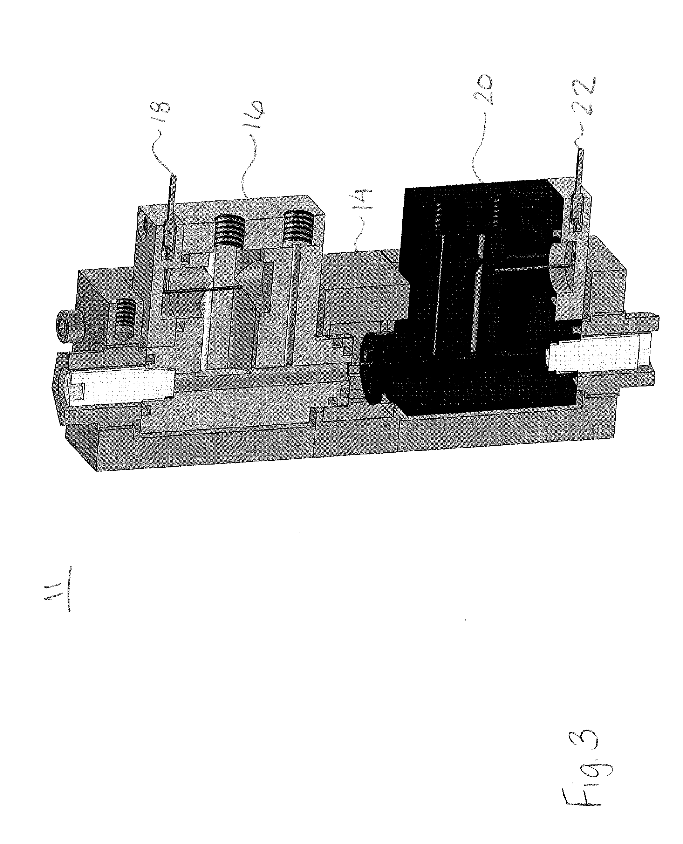

FIG. 3 is a cross-sectional view of the assembled cuvette assembly according to one embodiment of the present invention;

FIG. 4 is a detailed view of the top sub assembly according to one embodiment of the present invention;

FIG. 5 is a detailed view of the assembled cuvette assembly according to one embodiment of the present invention;

FIG. 6 is a detailed view of the cuvette assembly holder according to one embodiment of the present invention;

FIG. 7 is a detailed view of the cuvette assembly holder with optics according to one embodiment of the present invention;

FIG. 8 is a detailed view of the cuvette assembly holder with optics according to one embodiment of the present invention;

FIG. 9 is a detailed view of the cuvette assembly holder with optics according to one embodiment of the present invention;

FIG. 10 is a detailed view of the optics assembly according to one embodiment of the present invention;

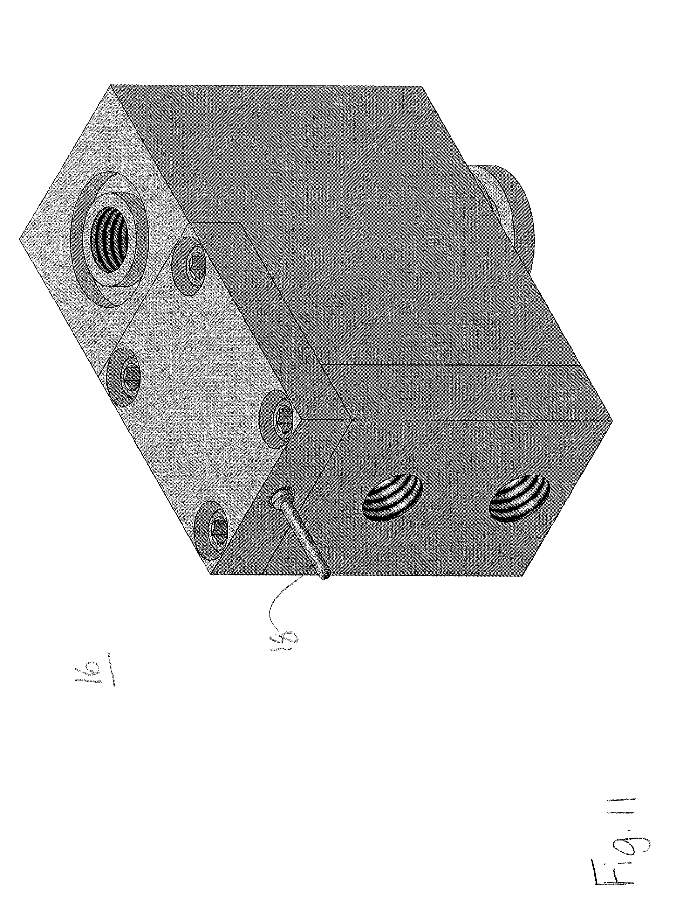

FIG. 11 is a detailed view of the top buffer chamber assembly according to one embodiment of the present invention; and

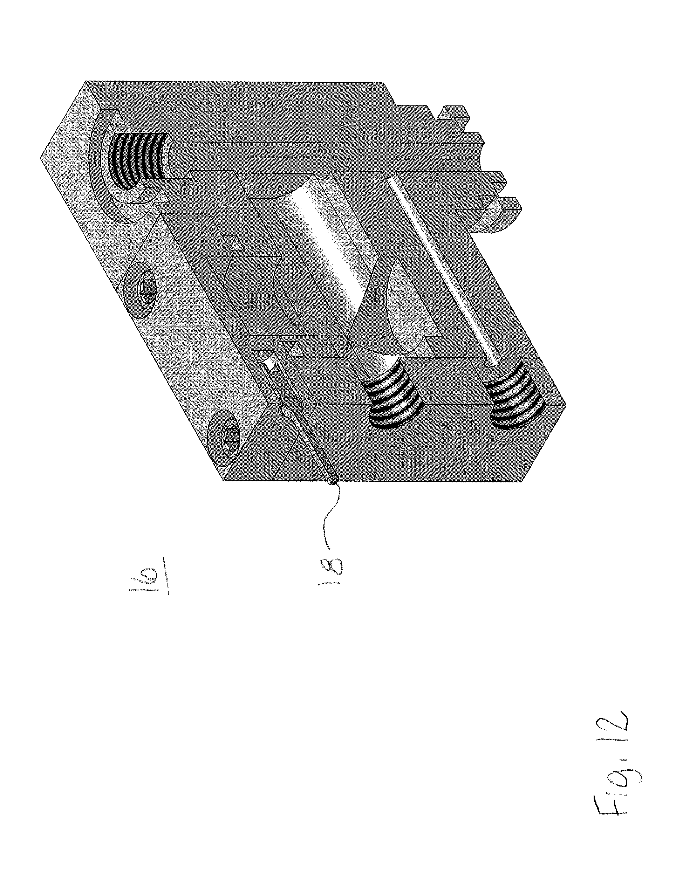

FIG. 12 is a cross-section view of the top buffer chamber according to one embodiment of the present invention.

DETAILED DESCRIPTION OF THE PREFERRED EMBODIMENTS

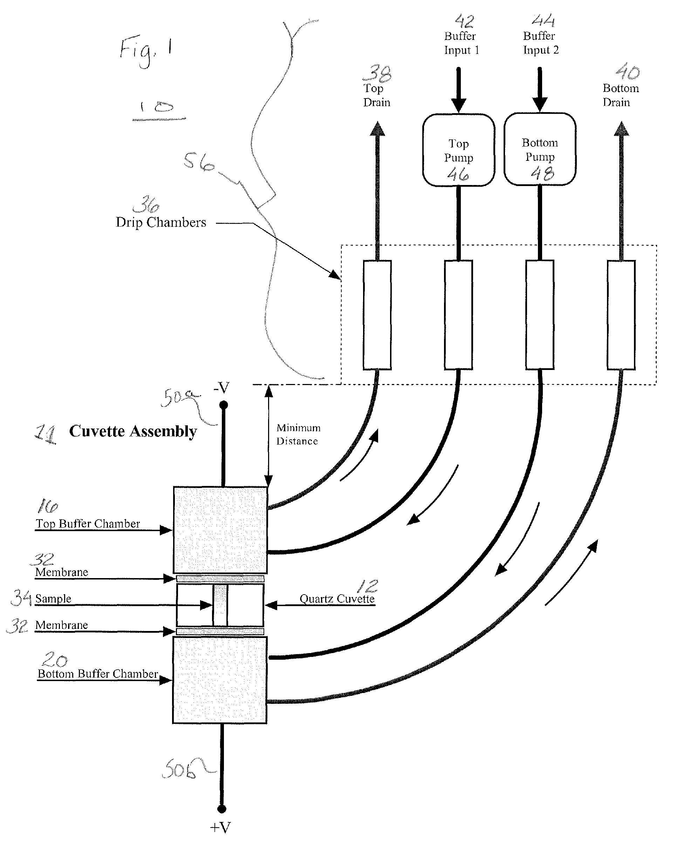

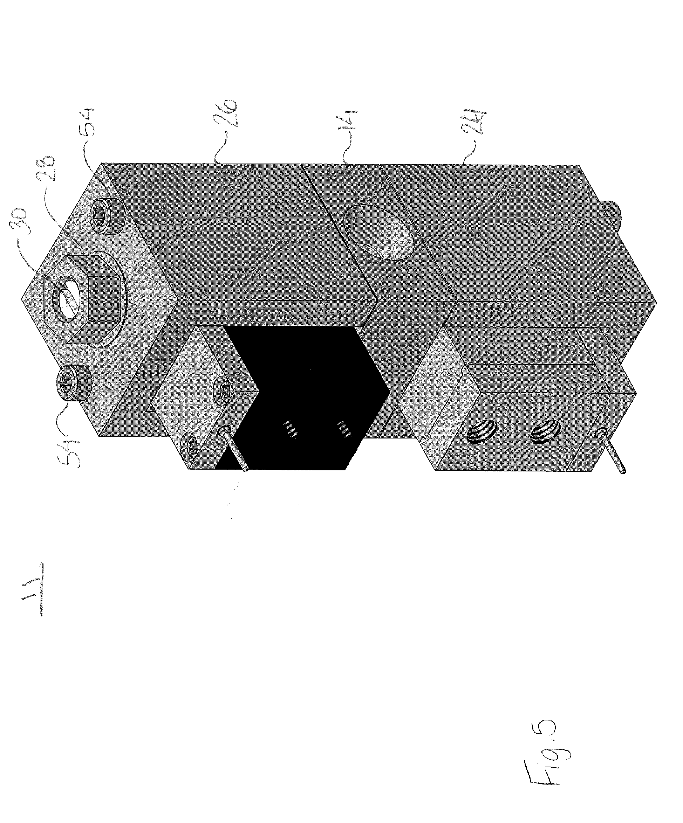

The present invention features a membrane confined electrophoresis (MCE) system 10, including a cuvette assembly 11, Figures 1, 2 and 5. The cuvette assembly 11 uses first principle techniques to measure effective charge ($z^*$) and electrophoretic mobility ($\mu$) of macromolecules, such as proteins for example, in solution. The cuvette assembly 11 provides fast and accurate information on molecule charges. The effective charge of the molecules is measured without comparison to standards and without the need for secondary parameter determination.

The present invention features first principle measurement techniques, direct determination of $z^*$, and real time electrophoretic mobility distribution, $g(\mu)$. The method can be accomplished using a low sample volume (approx. 20 uL) and a low sample concentration (approx. 100 $\mu$g/mL) over a wide temperature range (10-40 $\pm$ 0.1°C) using a wide range of solvents and pH.

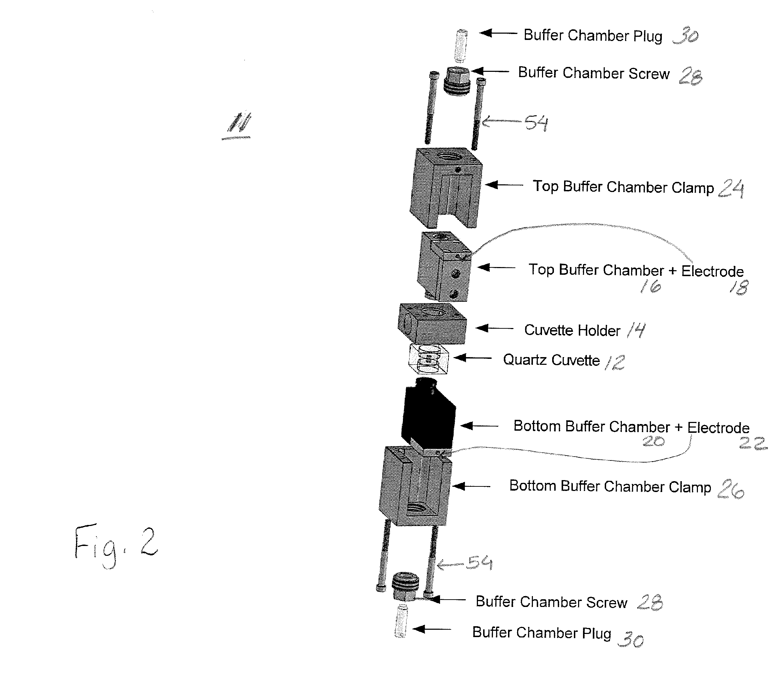

The cuvette assembly 11, Figure 2, features a quartz cuvette 12 encased by (disposed or held in) a cuvette holder 14. An upper portion of the cuvette assembly 11 includes a top buffer chamber 16 and a top buffer chamber electrode 18 which are encased by (disposed or held in) a top buffer chamber clamp 24. The top buffer chamber clamp 24 is held in place by one or more attachment mechanisms 54. The top buffer chamber clamp 24 also features a buffer chamber screw 28 and a buffer chamber plug 30. A lower portion of the cuvette assembly 11 includes a bottom buffer chamber 20 and a bottom buffer chamber electrode 22 which are encased by (disposed or held in) a bottom buffer chamber clamp 26. The bottom buffer chamber clamp 26 is held in place by one or more attachment mechanisms 54. The bottom buffer chamber clamp 24 also features a buffer chamber screw 28 and a buffer chamber plug 30.

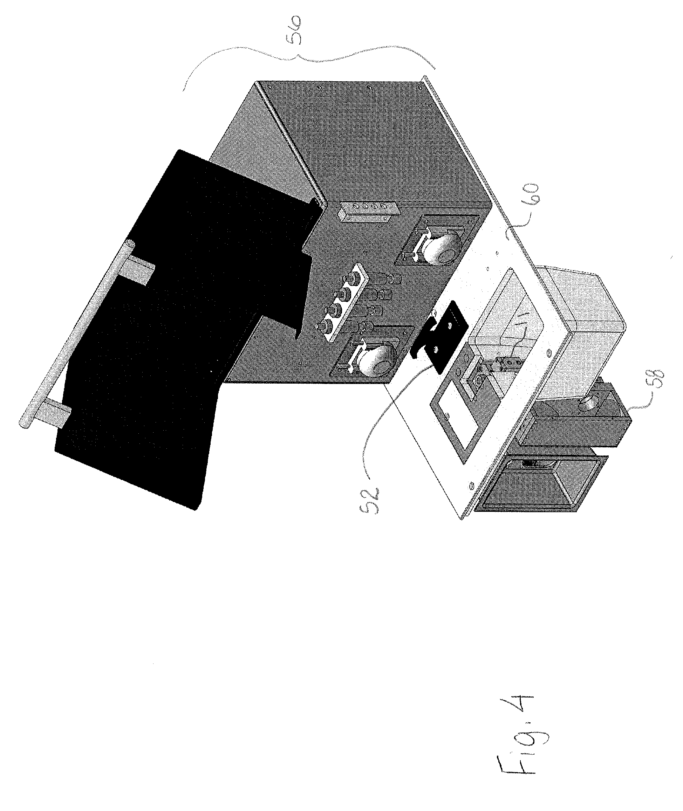

The cuvette assembly 11 is coupled to a platform 60, Fig. 4. An upper side of the platform 60 features a top sub assembly 56 (Figs. 1 and 4). The top sub assembly 56 includes an optical filter cartridge 52 as well as top and bottom pumps 46, 48; top and bottom drains 38 and 40; trip chambers 36; and first and second buffer inputs 42, 44.

The cuvette assembly 11 can be used for protein characterization, comparison of preparations, solvent formulation and drug development, for providing solubility and stability and for characterization of ion binding. The proposed or described uses of the present invention are not intended to be a limitation of the present invention.

Membrane Confined Electrophoresis (MCE) is a true first principle method for measuring the effective charge (z*) of macromolecules. In one example, a 20 μL sample 34 is held in a cuvette 12 sealed at either end by membranes 32, Figure 1. The membranes 32 trap the macromolecules, while allowing buffer solution including water and solvent components to pass through. The membrane material may be commercially available dialysis tubing, such as a treated cellulose-based material used for sausage casings, or a similar type of semi-permeable or partially-permeable membrane material. The material selection for the membrane can vary and will generally be chosen based upon the size of the macromolecules that are to be contained. An electric current is passed through the cuvette 12, establishing an electric field along its length by means of electrodes 50. Charged macroions move in the electric field, but are retained or contained within the cuvette 12 by the membranes 32. Drip chambers 36 include a top drain 38 and a bottom drain 40. The drip chambers 36 also feature a top pump 46 configured to receive a first buffer input 42 and a bottom pump 48 configured to receive a second buffer input 44.

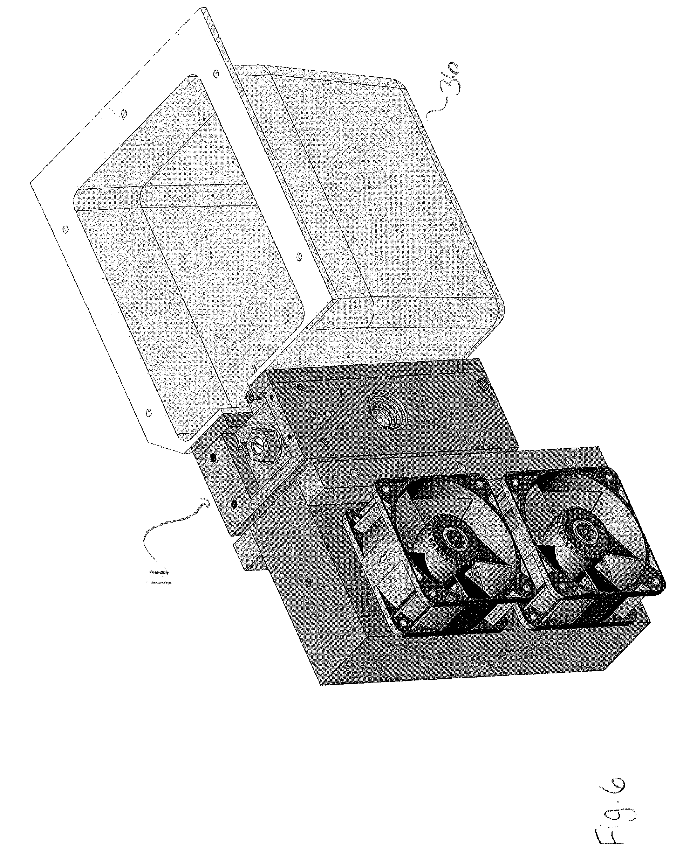

The cuvette assembly 11, Figure 6, is coupled to the drip chamber 36 by flexible tubing (not shown). The purpose of the buffer chambers 16, 20 is to transport buffer fluid to and from the buffer chambers 16, 20 without introducing air bubbles to the buffer chambers 16, 20. It is therefore preferable that the drip chambers 36 are mounted higher than the buffer chamber 16, 20.

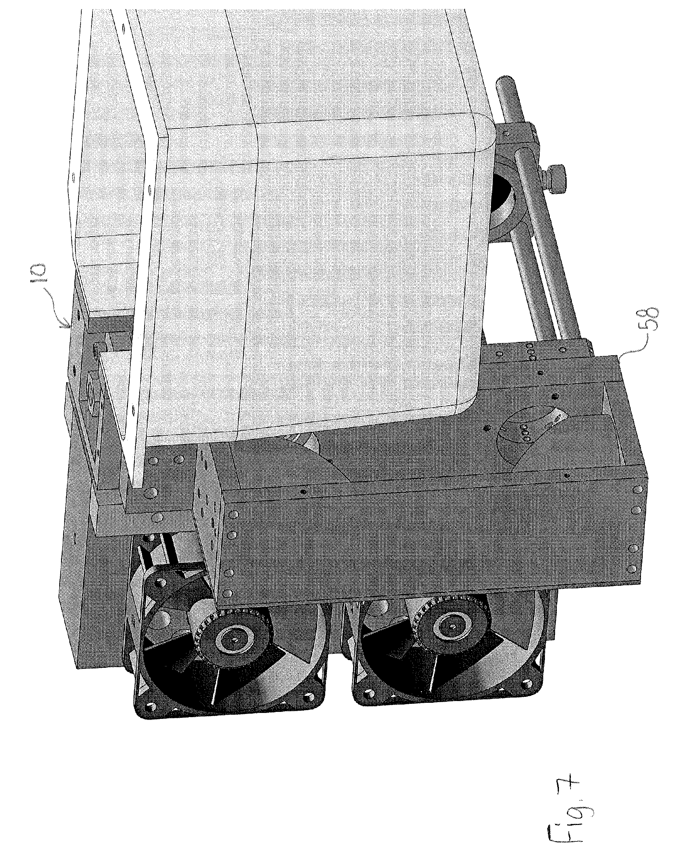

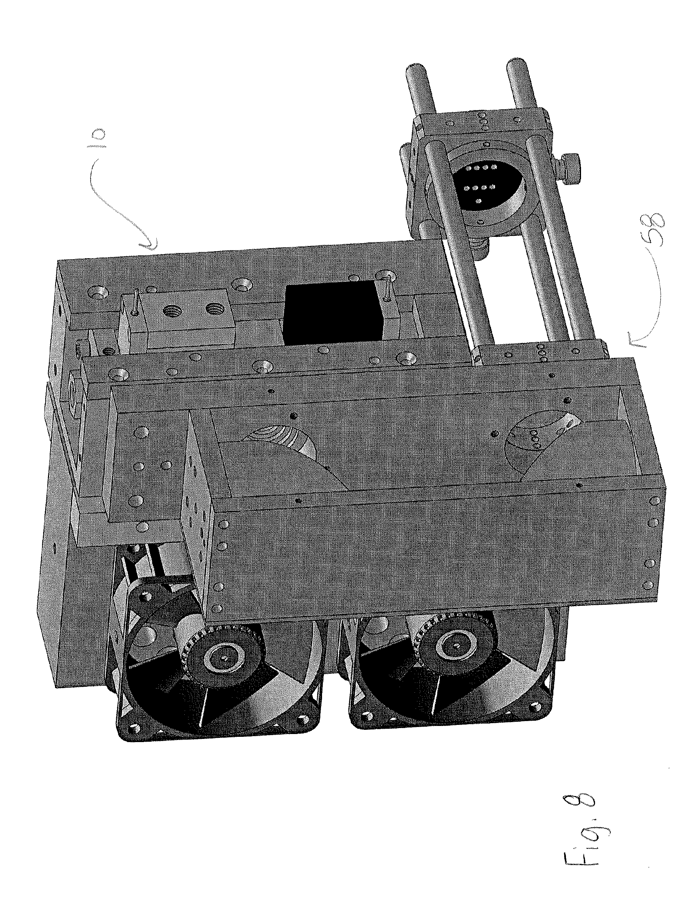

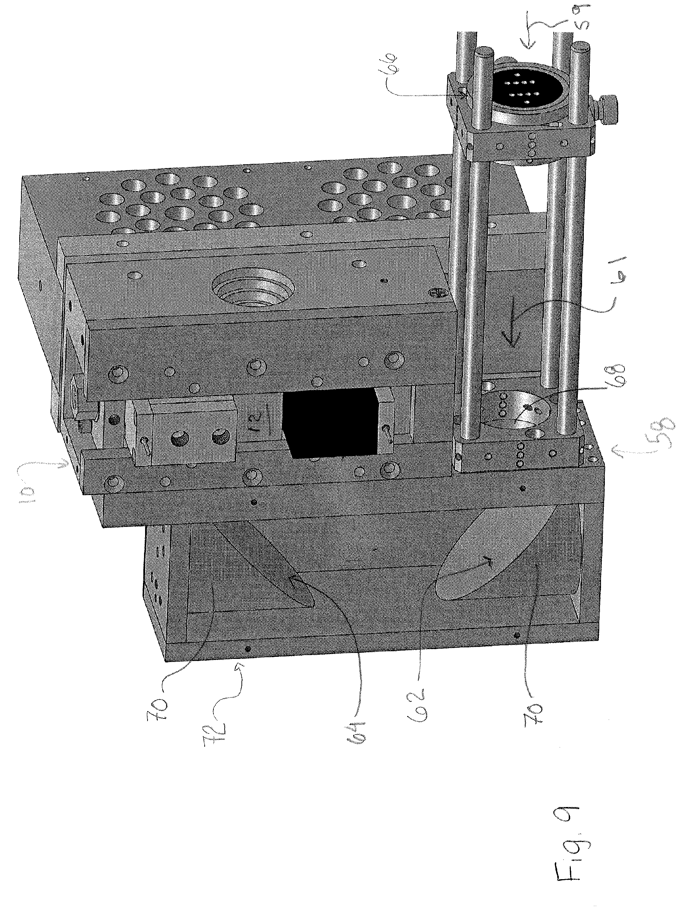

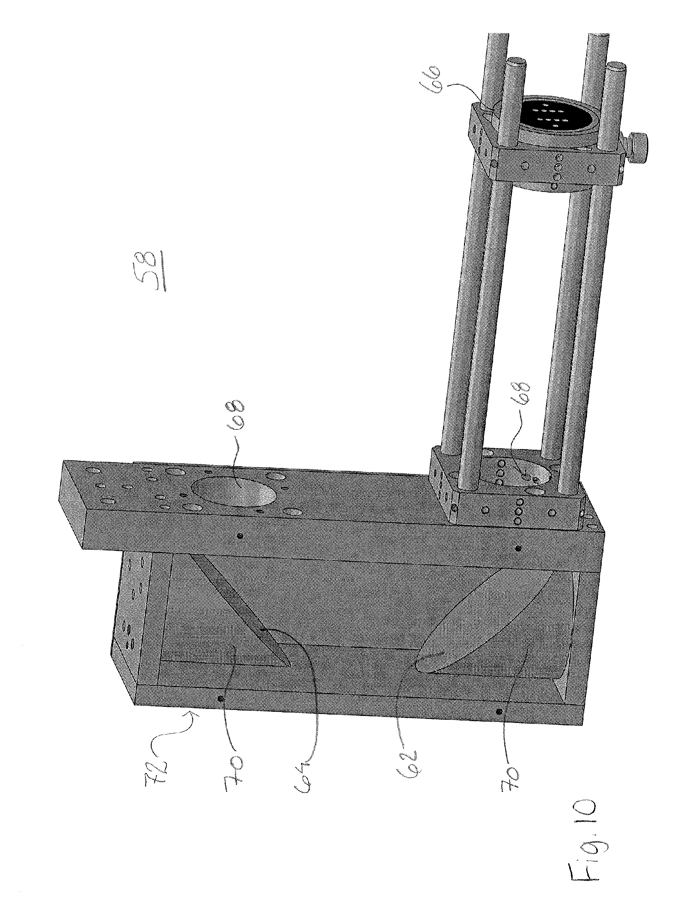

The MCE optical assembly system 58, Figures 7-10, is configured to attach to the cuvette assembly 10. The optical system 58 includes a first mirror 62 and a second mirror 64. The optical system also includes a high intensity, broad spectrum, collimated light source (not shown), an optical filter 66 for selection of wavelength of light to bathe the sample in, and in order to block stray light from reaching the imaging detector one or more slits 68, one or more baffles 70, and an enclosure 72 are utilized.

The light source produces the desired intensity of light represented by arrow 59 which passes through filter 66, thus providing light of the desired wavelength 61. The light at the desired wavelength 61 then travels through the sample contained in the quartz cuvette finally passing through the one or more slits 68 to reduce stray light. The light is then imaged by a pair of off access parabolic mirrors 62, 64 onto and image detector located at the image plain of the second mirror 64.

The optical system 58 produces an image of the cuvette contents bathed in collimated monochromatic light. A linear photodiode array (LPDA) located at the image plain of the mirror optics provides up to 512 absorbance readings spaced along the length of cuvette 12. The resulting absorbance profile is a measure of the concentration distribution, $c(x)$ along the cuvette 12. The concentration distribution $c(x)$ is utilized in the computations as set forth below.

The MCE provides two complementary modes of sample analysis: Steady State Electrophoresis (SSE) and Real-time Electrophoretic Mobility (REM).

When used in the SSE mode, a weak electric field is applied across the sample chamber 34. The sample ions move in the field until the flux of ions from the electric field is balanced by the flux due to diffusion. At steady state, the concentration gradient $c(x)$ is imaged by the MCE optics. By fitting the steady state concentration distribution, $c(x)$, to equation (1), z* may be determined.

$$(1) \quad c(x) = \delta + c_o \exp z^* [E/k_BT] (x - x_o)$$

$\delta$ = baseline offset
$C_O$ = concentration at reference point, $X_o$
$x_O$ = reference point when E field turned on
$T$ = sample temperature
$E$ = applied electric field
$k_B$ = Boltzman's constant
$z^*$ = Apparent electric charge of macroion

The electric field, E, is determined from the current, cross-sectional area of the sample chamber and conductivity of the buffer. The temperature is obtained from the MCE system temperature control software.

The MCE system 10 can measure the electrophoretic mobility in real time by measuring the time dependence of the sample concentration distribution. By using a stronger electric field than for SSE the sample can be driven rapidly to one side of the sample chamber. Intensity scans are preferably acquired every 5-11 seconds, and the boundary is observed to move across the sample chamber with a velocity of I(x). Subtraction of scans removes systematic noise, resulting in the time derivative dI(x)/dt. The velocity of the concentration boundary is used to calculate the electrophoretic mobility ($\mu$). The electrophoretic mobility can be transformed into effective charge (z*) using the Stokes radius ($R_S$) which can be determined with a complementary technique such as analytical ultracentrifugation or dynamic light scattering.

The effective charge (z*) may be transformed to the underlying protein charge (zDHH) using the Debye-Hückel-Henry equation.

Results have shown that the charge determined using the MCE method is consistent with the charge determined using the SSE method. MCE also has the capability and power to resolve differently charged components in a more complex sample. REM and SSE analysis have provided consistent results.

The present invention also features MCE control and analysis software. The software provides instrument control, protocol design, data organization and data analysis. The software is configured to allow the experiments to have multiple steps, wherein each step is user-customizable for current magnitude and direction, temperature, number of scans, time between scans, scans to average and solvent flow rate. After each experiment has been created, an experiment navigator allows a user to view current instrument conditions and protocol settings at any time.

A user loads the cuvette assembly 11, primes the solvent drip chambers 36, selects the desired experimental protocol and then runs the experiment. The software allows the user to view the data in real time and to analyze the data. An integrated data viewer allows users to display raw absorbance data, real time SSE moments, and real time mobility analysis. Data from previous experiments can be viewed and analyzed at any time. The data from the experiment may be stored in ASII format, and is preferably compatible with standard analysis software as well as providing an intuitive data directory structure. The data analysis feature of the software allows a user to co-analyze data from multiple experiments, to switch data view between position, mobility, and charge with the click of a button, to view real-time charge distribution analysis, to print, email, and save graph images, while using instantaneous data analysis and 3D graphing when necessary as well as providing real-time mobility distribution analysis.

A complete user package would include the MCE instrument and cuvette assembly 10, a computer with interface and monitor, the MCE control software, solvent delivery bottles, optical filter cartridges and membranes. Other optional equipment may include a pH and conductivity measurement kit, spare quartz cuvette, spare cuvette assembly, additional optical filter cartridges, membranes, and peristaltic pump tubing among other items.

The present invention thus provides a method and system for measuring the effective charge and electrophoretic mobility of macromolecules in a solution that greatly improves on the existing electrophoresis systems. The membrane confined electrophoresis system of the present invention measures the effective charge without comparison to standards and without the need for secondary parameter determination.

Modifications and substitutions by one of ordinary skill in the art are considered to be within the scope of the present invention, which is not to be limited except by the allowed claims and their legal equivalents.

**Claims**

1. A system for measuring the effective charge and electrophoretic mobility of macromolecules in a solution, the system comprising:

   a cuvette assembly comprising:

   a cuvette, disposed in a cuvette holder, said cuvette configured for containing a sample of fluid including macromolecules on which electrophoretic mobility measurement is to be performed, said cuvette including said contained sample of fluid including macromolecules sealed on a first side by a first membrane and on a second side by a second membrane;
   a top buffer chamber including a top buffer chamber electrode, disposed in a top buffer chamber holder, wherein the top buffer chamber is coupled to the first membrane; and
   a bottom buffer chamber including a bottom buffer chamber electrode, disposed in a bottom buffer chamber holder, wherein the bottom buffer chamber is coupled to the second membrane;

   an electrical current generator, coupled to said top and bottom buffer chamber electrodes and configured for causing an electrical current to pass through the cuvette, wherein the electrical current is configured to establish an electric field along a length of the cuvette and through said sample of fluid;
   a platform, configured for supporting said cuvette assembly;
   a top sub assembly, coupled to an upper region of the platform, the top sub assembly comprising an optical fiber cartridge, top and bottom pumps, top and bottom drains, one or more drip chambers and first and second buffer inputs; and
   an optics assembly, coupled to a lower region of the platform, wherein the optics assembly is configured for measuring boundary motion on said macromolecules in fluid in said cuvette during electrophoresis.

2. The system of claim 1, wherein the cuvette is a quartz cuvette.

3. The system of claim 1, wherein said top buffer chamber is coupled to said top pump, said top drain and said first buffer input, and wherein said bottom buffer chamber is coupled to said bottom pump, said bottom drain and said second buffer input.

4. The system of claim 1, wherein said optics assembly includes a first mirror, a second mirror, a high intensity, broad spectrum collimated light source, an optical filter an imaging detector and an enclosure.

Fig. 1

18

56

36
Drip Chambers

42
Buffer
Input 1

44
Buffer
Input 2

38
Top
Drain

40
Bottom
Drain

Top
Pump
46

Bottom
Pump
48

50a
-V

11 **Cuvette Assembly**

Minimum
Distance

16
Top Buffer Chamber

32
Membrane

34 Sample

12
Quartz Cuvette

32 Membrane

20
Bottom Buffer Chamber

50b

+V

EP 2 610 615 A2

Buffer Chamber Plug 30
Buffer Chamber Screw 28
54
Top Buffer Chamber Clamp 24
Top Buffer Chamber + Electrode 16 18
Cuvette Holder 14
Quartz Cuvette 12
Bottom Buffer Chamber + Electrode 20 22
Bottom Buffer Chamber Clamp 26
54
Buffer Chamber Screw 28
Buffer Chamber Plug 30

11

Fig. 2

8

Fig. 3

Fig. 4

Fig.5

11

30

Fig 6

Fig. 7

Fig. 8

Fig. 9

EP 2 610 615 A2

58

72

70

68

64

62

70

68

66

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61569441 B
- US 4994161 A